# EUROPÄISCHE PATENTANMELDUNG

(11) **EP 4 342 740 A1**
(43) Veröffentlichungstag der Anmeldung: **27.03.2024**
(21) Anmeldenummer: 23197575.6
(22) Anmeldetag: 15.09.2023
(51) Int. Cl.: B60R 13/04

(54) **ENDSTÜCK FÜR EINE ZIER- ODER SCHACHTLEISTE, ZIER- ODER SCHACHTLEISTE UND ANORDNUNG EINER ZIER- ODER SCHACHTLEISTE AN EINEM FAHRZEUG**

(30) Priorität: 23.09.2022 DE 102022124493
(71) Anmelder: CQLT SaarGummi Technologies S.à.r.l., 5544 Remich (LU)
(72) Erfinder: Thiel, Daniel, 66701 Beckingen-Oppen (DE)
(74) Vertreter: Patentanwälte Bernhardt / Wolff Partnerschaft mbB

(57) **Zusammenfassung**

Die Erfindung betrifft ein Endstück (2) für eine Zier- oder Schachtleiste (1) insbesondere eines Kraftfahrzeugs, eine derartige Zier- oder Schachtleiste (1) sowie die Anordnung einer derartigen Zier- oder Schachtleiste an einem Fahrzeug. Um eine einfache und dennoch spaltfreie Montage zu ermöglichen, umfasst das Endstück (2) einen ersten, an einem freien Ende einer Zier- oder Schachtleiste (1) befestigbaren Abschnitt (4) und einen zweiten Abschnitt (5), welcher relativ zu dem ersten Abschnitt (4) beweglich ausgebildet ist.

## Beschreibung

Die Erfindung betrifft ein Endstück für eine Zier- oder Schachtleiste insbesondere eines Kraftfahrzeugs nach dem Oberbegriff des Anspruchs 1. Des Weiteren betrifft die Erfindung auch eine Zier- oder Schachtleiste mit mindestens einem an einem freien Ende angeordneten Endstück sowie eine Anordnung einer Zier- oder Schachtleiste an einem Fahrzeug.

Durch Benutzung sind Zier- oder Schachtleisten für Kraftfahrzeuge, insbesondere im Bereich von Fensterrahmen, bekannt, welche in Längsrichtung einen zumeist gleichbleibenden Querschnitt aufweisen, wobei an zumindest einem freien Ende der Zier- oder Schachtleiste eine Endkappe aus Plastik fest montiert ist. Zier- oder Schachtleisten werden zumeist als Längs- bzw. Strangprofil aus Metall, Kunststoff und/oder Elastomer vorzugsweise aus Endlosware durch Abschneiden gebildet. Mindestens eines der freien Enden kann dann durch eine Endkappe bündig und ästhetisch ansprechend abgeschlossen werden. Sofern die Zier- oder Schachtleiste im Querschnitt Hohlkammern aufweist, können diese ebenfalls durch die Endkappe verschlossen werden, um ein Eindringen von Feuchtigkeit oder Schmutz zu verhindern. Durch Fertigungs- und Einbautoleranzen kann es jedoch dazu kommen, dass die Endkappe zu einem angrenzenden Bauteil, beispielsweise einem Fahrzeug-Außenspiegel, einen Spalt aufweist, der so groß ist, dass sich ein nachteiliger ästhetischer Eindruck ergibt.

Aufgabe der Erfindung ist es daher, eine Zier- oder Schachtleiste zu bilden, welche einfach zu fertigen ist und sich dennoch mit wenig Aufwand spaltfrei an einem Fahrzeug montieren lässt.

Diese Aufgabe wird dadurch gelöst, dass das Endstück für eine Zier- oder Schachtleiste einen ersten, an einem freien Ende einer Zier- oder Schachtleiste befestigbaren Abschnitt und einen zweiten Abschnitt, welcher relativ zu dem ersten Abschnitt beweglich ausgebildet ist, umfasst. Durch den beweglichen zweiten Abschnitt kann ein gegebenenfalls vorhandener Spalt zu einem angrenzenden Bauteil überbrückt werden, was eine spaltfreie Montage einer entsprechenden Zier- oder Schachtleiste ermöglicht.

In einer bevorzugten Ausführungsform ist der zweite Abschnitt über eine Führung, insbesondere eine Linearführung, mit dem ersten Abschnitt längsbeweglich verbunden. Als Führung können beispielsweise entsprechende Kontaktflächen an einem der Abschnitte vorgesehen sein, an welchem sich korrespondierende Kontaktflächen des anderen Abschnitts abstützen. Die Kontaktflächen erstrecken sich dabei vorzugsweise in Längsrichtung der Zier- oder Schachtleiste. Durch die Führung wird eine exakte Positionierung entlang der Längsrichtung ermöglicht und beispielsweise ein gegenseitiges Verdrehen der Abschnitte des Endstücks verhindert.

Um den zweiten Abschnitt gegen ein angrenzendes Bauteil wie beispielsweise einen Fahrzeug-Außenspiegel beaufschlagen zu können, kann ein elastisches Element, insbesondere ein Federelement, vorgesehen sein, welches vorzugsweise zwischen dem ersten Abschnitt und dem zweiten Abschnitt angeordnet ist. Das elastische Element kann den zweiten Abschnitt nach außen und damit in Richtung eines angrenzenden Bauteils beaufschlagen, wodurch eine spaltfreie Anlage an dem angrenzenden Bauteil gewährleistet wird. Bei dem elastischen Element kann es sich neben einem Federelement beispielsweise in Form einer Spiralfeder aus Kunststoff oder Metall auch um ein einstückig mit dem ersten Abschnitt und/oder zweiten Abschnitt ausgebildetes Element handeln, beispielsweise in Form eines elastisch verformbaren, gekrümmten Bogens, welche die zwei Abschnitte des Endstücks miteinander verbindet.

Besonders bevorzugt kann der zweite Abschnitt als Kappe mit einem gegenüber dem ersten Abschnitt größeren Querschnitt ausgebildet sein. Hierdurch wird insbesondere ein bündiger Abschnitt des freien Endes einer Zier- oder Schachtleiste ermöglicht, wenn der erste Abschnitt in das freie Ende der Zier- oder Schachtleiste eingesteckt wird. Besonders vorteilhaft kann der zweite Abschnitt hierbei den ersten Abschnitt und ggf. auch einen an das freie Ende angrenzenden Abschnitt einer Zier- oder Schachtleiste zumindest teilweise umschließen. Insbesondere kann vorgesehen sein, dass über den gesamten Verfahrweg des zweiten Abschnitts relativ zu dem ersten Abschnitt der zweite Abschnitt den ersten Abschnitt und ggf. auch einen an das freie Ende angrenzenden Abschnitt einer Zier- oder Schachtleiste umschließt. Dies gewährleistet, dass in jeder Position des zweiten Abschnitts relativ zu dem ersten Abschnitt kein Spalt zwischen dem zweiten Abschnitt und den ersten Abschnitt bzw. dem zweiten Abschnitt und der Zier- oder Schachtleiste vorhanden ist. Ein Eindringen von Schmutz und Feuchtigkeit wird hierdurch verhindert und ein optisch ansprechender Gesamteindruck ermöglicht.

Um den ersten Abschnitt und den zweiten Abschnitt beweglich miteinander zu verbinden, kann eine Befestigungsvorrichtung vorgesehen sein. Die Befestigungsvorrichtung kann vorteilhaft ein Halteelement an einem der Abschnitte, vorzugsweise dem zweiten Abschnitt, umfassen, welches haltend ein Durchgangsloch in dem anderen Abschnitt, vorzugsweise dem ersten Abschnitt, hintergreift. Das Halteelement, welches beispielsweise als Stift ausgeführt sein kann, kann in dem Durchgangsloch geführt werden. Um ein unbeabsichtigtes Lösen des zweiten Abschnitts von dem ersten Abschnitt zu verhindern, kann das Halteelement an einem freien Ende mindestens einen seitlichen Vorsprung, insbesondere einen hakenartigen und/oder federnd gelagerten Vorsprung aufweisen. Hierdurch wird zum einen eine einfache Montage durch ein Einstecken des Halteelements in das Durchgangsloch und andererseits eine sichere gegenseitige Befestigung ohne die Gefahr eines unbeabsichtigten Lösens gewährleistet.

Des Weiteren wird eine Zier- oder Schachtleiste insbesondere für Kraftfahrzeuge mit mindestens einem an einem freien Ende angeordneten Endstück beansprucht, wobei das Endstück wie beschrieben ausgebildet ist. Eine derartige Zier- oder Schachtleiste lässt sich besonders einfach und spaltfrei in Bezug auf angrenzende Bauteile montieren.

In einer vorteilhaften Ausführungsform kann der erste Abschnitt des Endstücks an dem freien Ende der Zier- oder Schachtleiste befestigt sein, insbesondere zumindest teilweise oder vollständig in einem Hohlraum in dem freien Ende angeordnet sein. Die Befestigung kann beispielsweise mittels Klemmen und/oder Verkleben erfolgen.

In einer besonders vorteilhaften Ausführungsform kann der zweite Abschnitt die Zier- oder Schachtleiste an dem freien Ende zumindest teilweise umschließen, beispielsweise an einer äußeren Sichtfläche der Zier- oder Schachtleiste, wo aus optischen Gründen kein Spalt zwischen dem zweiten Abschnitt und dem freien Ende der Zier- oder Schachtleiste vorhanden sein soll. Alternativ kann der zweite Abschnitt die Zier- oder Schachtleiste an dem freien Ende auch vollständig im Querschnitt umgreifen. Dabei liegt der zweite Abschnitt mit dem umgreifenden Teil vorzugsweise an einer Außenseite des freien Endes der Zier- oder Schachtleiste an, so dass sich zusätzlich eine Führung ergibt. Es kann zudem weiter vorgesehen sein, dass der zweite Abschnitt das freie Ende der Zier- oder Schachtleiste auch dann umgreift, wenn der zweite Abschnitt von dem ersten Abschnitt den durch die Befestigungsvorrichtung vorgegebenen maximalen Abstand aufweist.

Zusätzlich wird auch eine Anordnung einer Zier- oder Schachtleiste an einem Fahrzeug, insbesondere Kraftfahrzeug, beansprucht, wobei an einem freien Ende der Zier- oder Schachtleiste ein Endstück angeordnet ist. Die Zier- oder Schachtleiste ist wie zuvor beschrieben ausgebildet und der bewegliche zweite Abschnitt des Endstücks liegt vorgespannt an einem angrenzenden Bauteil des Fahrzeugs an. Eine derartige Anordnung ist aufgrund der spaltfreien Ausgestaltung optisch ansprechend und zudem wenig anfällig für Verschmutzung oder Windgeräusche bei Betrieb des Fahrzeugs.

Weitere Besonderheiten und Vorzüge der Erfindung ergeben sich aus der folgenden Beschreibung eines bevorzugten Ausführungsbeispiels anhand der Zeichnung.

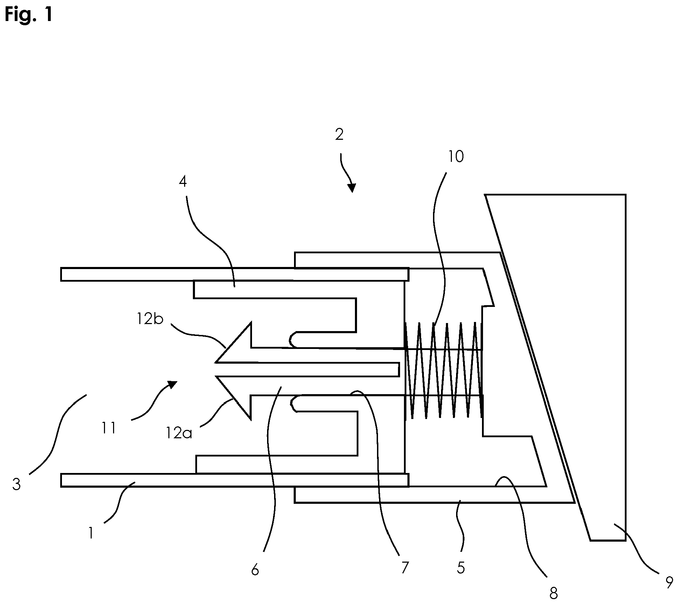

In Figur 1 ist eine Zier- oder Schachtleiste 1 zur Montage an einem Kraftfahrzeug schematisch gezeigt, an deren rechten freien Ende ein Endstück 2 angeordnet ist. Die Länge der Zier- oder Schachtleiste 1 ist anders als dargestellt üblicherweise im Verhältnis deutlich länger und kann sich über die gesamte Breite einer Fahrzeugscheibe oder einer Fahrzeugtür erstrecken. Bei dem gezeigten Ausführungsbeispiel weist die Zier- oder Schachtleiste 1 einen Hohlraum 3 auf, welcher sich in Längsrichtung der Zier- oder Schachtleiste 1 vorzugsweise mit konstantem Querschnitt erstreckt. Die Zier- oder Schachtleiste 1 kann beispielsweise aus Metall, Kunststoff und/oder Elastomer/Gummi gebildet sein und wird vorzugsweise mittels Extrusion hergestellt.

Das Endstück 2 umfasst einen ersten, an dem freien Ende der Zier- oder Schachtleiste 1 befestigten Abschnitt 4 und einen zweiten Abschnitt 5, welcher relativ zu dem ersten Abschnitt 4 beweglich ausgebildet ist. Um den zweiten Abschnitt 5 gegenüber dem ersten Abschnitt 4 zu führen, ist eine Linearführung vorgesehen, welche einen von dem zweiten Abschnitt 5 in Richtung des ersten Abschnitts 4 vorstehenden Stift 6 und ein Durchgangsloch 7 in dem ersten Abschnitt 4 umfasst, in welchem der Stift 6 geführt ist. Zusätzlich ist vorgesehen, dass eine innere Kontaktfläche 8 einer von dem zweiten Abschnitt 5 in Richtung des ersten Abschnitts 4 vorstehenden Hülse an einer Außenfläche der Zier- oder Schachtleiste 1 vorzugsweise spaltfrei anliegt und hierdurch zusätzlich geführt wird. Der erste Abschnitt 4 ist hierbei in den Hohlraum 3 am freien Ende der Zier- oder Schachtleiste 1 eingeschoben und vorzugsweise mittels Klemmen und/oder Verkleben fest mit der Zier- oder Schachtleiste 1 verbunden. Folglich wird durch die beschriebene Ausgestaltung eine stabile Längsführung des zweiten Abschnitts 5 gegenüber dem ersten Abschnitt 4 bzw. der Zier- oder Schachtleiste 1 ermöglicht.

Um den zweiten Abschnitt 5 vorzugsweise spaltfrei gegen ein hier schematisch dargestelltes angrenzendes Bauteil 9 eines Fahrzeugs andrücken zu können, ist zwischen dem ersten Abschnitt 4 und dem zweiten Abschnitt 5 ein elastisches Element in Form einer Spiralfeder 10 vorgesehen. Für eine sichere Positionierung ist die Spiralfeder 10 konzentrisch um den Stift 6 herum angeordnet und stützt sich mit ihren Enden an dem ersten Abschnitt 4 und dem zweiten Abschnitt 5 ab.

Wie aus Figur 1 weiter zu entnehmen ist, ist der zweite Abschnitt 5 als Kappe mit einem gegenüber dem ersten Abschnitt 4 größeren Querschnitt ausgebildet. Hierbei umschließt die vorgenannte Hülse des zweiten Abschnitts 5 das freie Ende der Zier- oder Schachtleiste 1 im Querschnitt vorzugsweise vollständig. Der Bereich der Überlappung in Längsrichtung, also in horizontaler Richtung der Zeichnung, ist dabei vorzugsweise derart gewählt, dass bei einem maximalen Abstand zwischen dem ersten Abschnitt 4 und im zweiten Abschnitt 5 zumindest noch eine geringfügige Überlappung zwischen dem zweiten Abschnitt 5 und dem ersten Abschnitt 4 bzw. der Zier- oder Schlachtleiste 1 vorhanden ist. Hierdurch wird sichergestellt, dass nicht durch einen Spalt zwischen dem ersten Abschnitt 4 und im zweiten Abschnitt 5 Feuchtigkeit oder Schmutz in das Endstück 2 eindringen kann.

Um zu gewährleisten, dass der erste Abschnitt 4 und der zweite Abschnitt 5 nur in gewissen Grenzen relativ zueinander beweglich sind und um ein unbeabsichtigtes gegenseitiges Lösen zu verhindern, ist eine Befestigungsvorrichtung 11 zur gegenseitigen Verbindung des ersten Abschnitts 4 und des zweiten Abschnitts 5 vorgesehen. Die Befestigungsvorrichtung 11 umfasst zwei Halteelemente 12a, 12b, welche an dem freien Ende des Stifts 6 angeordnet sind und als seitliche Vorsprünge hakenartig das Durchgangsloch 7 haltend hintergreifen. Wie der Darstellung zu entnehmen ist, kann durch einen Längsschlitz, welcher sich vom freien Ende des Stifts 6 über einen Teil der Länge des Stifts 6 erstreckt, die Elastizität der Halteelemente 12a, 12b zueinander erhöht werden, so dass die Halteelemente 12a, 12b beim Einstecken in das Durchgangsloch 7 zusammengedrückt und anschließend federnd in die gezeigte Ausgangslage zurückbewegt werden.

Eine derartige Zier- oder Schachtleiste 1 kann besonders einfach und spaltfrei an einem Fahrzeug montiert werden, da durch den federnd vorgespannten zweiten Abschnitt 5 des Endstücks 2 ein zuverlässiges Andrücken an ein angrenzendes Bauteil 9 des Fahrzeugs möglich ist und hierdurch Spalte verhindert werden.

### Bezugszeichenliste:

- 1: Zier- oder Schachtleiste
- 2: Endstück
- 3: Hohlraum
- 4: Erster Abschnitt des Endstücks
- 5: Zweiter Abschnitt des Endstücks
- 6: Stift
- 7: Durchgangsloch
- 8: Kontaktfläche
- 9: Angrenzendes Bauteil
- 10: Spiralfeder
- 11: Befestigungsvorrichtung
- 12a, 12b: Halteelemente

## Patentansprüche

1. Endstück (2) für eine Zier- oder Schachtleiste (1) insbesondere eines Kraftfahrzeugs,
**gekennzeichnet durch**
einen ersten, an einem freien Ende einer Zier- oder Schachtleiste (1) befestigbaren Abschnitt (4) und einen zweiten Abschnitt (5), welcher relativ zu dem ersten Abschnitt (4) beweglich ausgebildet ist.

2. Endstück (2) nach Anspruch 1,
**dadurch gekennzeichnet,**
**dass** der zweite Abschnitt (5) über eine Führung (5, 7), insbesondere eine Linearführung, mit dem ersten Abschnitt (4) längsbeweglich verbunden ist.

3. Endstück (2) nach Anspruch 1 oder 2,
**dadurch gekennzeichnet,**
**dass** zwischen dem ersten Abschnitt (4) und dem zweiten Abschnitt (5) ein elastisches Element, insbesondere ein Federelement (10), vorgesehen ist.

4. Endstück (2) nach einem der Ansprüche 1 bis 3,
**dadurch gekennzeichnet,**
**dass** der zweite Abschnitt (5) als Kappe mit einem gegenüber dem ersten Abschnitt (4) größeren Querschnitt ausgebildet ist.

5. Endstück (2) nach einem der Ansprüche 1 bis 4,
**dadurch gekennzeichnet,**
**dass** der zweite Abschnitt (5) den ersten Abschnitt (4) zumindest teilweise umschließt.

6. Endstück (2) nach einem der Ansprüche 1 bis 5,
**gekennzeichnet durch**
eine Befestigungsvorrichtung (11) zur gegenseitigen Verbindung von erstem Abschnitt (4) und zweitem Abschnitt (5).

7. Endstück (2) nach Anspruch 6,
**dadurch gekennzeichnet,**
**dass** die Befestigungsvorrichtung (11) ein Halteelement (12a; 12b) an einem Abschnitt (5) umfasst, welches haltend ein Durchgangsloch (7( in dem anderen Abschnitt (4) hintergreift.

8. Endstück (2) nach Anspruch 7,
**dadurch gekennzeichnet,**
**dass** das Halteelement (12a; 12b) an einem freien Ende mindestens einen seitlichen Vorsprung, insbesondere einen hakenartigen und/oder federnd gelagerten Vorsprung, aufweist.

9. Zier- oder Schachtleiste (1), insbesondere für Kraftfahrzeuge, mit mindestens einem an einem freien Ende angeordneten Endstück (2),
**dadurch gekennzeichnet,**
**dass** das Endstück (2) nach einem der Ansprüche 1 bis 8 ausgebildet ist.

10. Zier- oder Schachtleiste (1) nach Anspruch 9,
**dadurch gekennzeichnet,**
**dass** der erste Abschnitt (4) des Endstücks (2) an dem freien Ende der Zier- oder Schachtleiste (1) befestigt ist, insbesondere zumindest teilweise in einem Hohlraum (3) in dem freien Ende angeordnet ist.

11. Zier- oder Schachtleiste (1) nach Anspruch 9 oder 10,
**dadurch gekennzeichnet,**
**dass** der zweite Abschnitt (5) die Zier- oder Schachtleiste (1) zumindest teilweise umgreift.

12. Anordnung einer Zier- oder Schachtleiste (1) an einem Fahrzeug, insbesondere Kraftfahrzeug, wobei an einem freien Ende der Zier- oder Schachtleiste (1) ein Endstück (2) angeordnet ist,
**dadurch gekennzeichnet,**
**dass** die Zier- oder Schachtleiste (1) nach einem der Ansprüche 9 bis 11 ausgebildet ist und der zweite Abschnitt (5) des Endstücks (2) an einem angrenzenden Bauteil (9) des Kraftfahrzeugs vorgespannt anliegt.
